(19) **Europäisches Patentamt / European Patent Office / Office européen des brevets**

(11) **EP 4 563 633 A1**

(12) **EUROPEAN PATENT APPLICATION**
published in accordance with Art. 153(4) EPC

(43) Date of publication:
04.06.2025 Bulletin 2025/23

(21) Application number: 23846302.0

(22) Date of filing: 18.07.2023

(51) International Patent Classification (IPC):
*C08J 11/14* (2006.01)    *B29B 17/00* (2006.01)
*D06M 11/05* (2006.01)

(52) Cooperative Patent Classification (CPC):
B29B 17/00; C08J 11/14; D06M 11/05; Y02W 30/62

(86) International application number:
PCT/JP2023/026272

(87) International publication number:
WO 2024/024571 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.07.2022 JP 2022121193

(71) Applicants:
• Toyobo Co., Ltd.
Kita-ku
Osaka-shi, Osaka 530-0001 (JP)
• National University Corporation Kumamoto
University
Kumamoto 860-8555 (JP)

(72) Inventors:
• MATSUMURA, Mei
Otsu-shi, Shiga 520-0292 (JP)
• INAGAKI, Jun
Otsu-shi, Shiga 520-0292 (JP)
• ITO, Katsuya
Osaka-shi, Osaka 530-0001 (JP)
• SASAKI, Mitsuru
Kumamoto-shi, Kumamoto 860-8555 (JP)

(74) Representative: Müller-Boré & Partner
Patentanwälte PartG mbB
Friedenheimer Brücke 21
80639 München (DE)

(54) **METHOD FOR RECYCLING HIGH-MOLECULAR-WEIGHT MATERIAL, AND FIBER PRODUCT**

(57) The object of the present invention is to provide a recycling method which facilitates the recovery of a highly recyclable polymer material from a solid mixture including a polyester and the polymer material through a process with low environmental impact. A method for recycling the polymer material that includes the steps of heating the solid mixture including the polyester and the polymer material in the presence of water, separating the polyester and water from the solid mixture by melting, and recovering the polymer material as a solid material, wherein, when the polyester has Tm as a melting point in air, the polymer material has a melting point higher than the Tm of the polyester, or the polymer material has no melting point and is a solid at the Tm of the polyester, and the heating is conducted at a temperature of (the Tm - 70)°C or higher and (the Tm - 10)°C or lower.

[FIG. 1]

Before treatment / After treatment (Example 3)
Right side
Wrong side

EP 4 563 633 A1

**Description**

TECHNICAL FIELD

The present invention relates to a method for recycling a polymer material. The present invention also relates to a textile product formed by using a polymer fiber as the polymer material obtained by the above recycling method.

BACKGROUND ART

In recent years, recycling of wastes has attracted attention from the viewpoint of reducing environmental impact. However, recycling of solid mixtures including a polyester and a polymer material has not progressed due to difficulty in separating the polyester and the polymer material.

A known solid mixture including a polyester and a polymer material includes a textile product including a polyester fiber and a polymer fiber. A known method for recycling the textile product includes a method in which a polymer fiber such as a cotton fiber is decomposed by heat treatment of the textile product under highly acidic condition of pH 2 or lower and the polyester fiber is recovered as a solid material (Patent Documents 1 and 2).

However, the recycling method involving the treatment under highly acidic condition does not allow the polymer fiber to retain a shape of the polymer fiber, and a decomposition product of the polymer fiber is recovered instead. For this reason, the recovered polymer fiber has limited applications of reuse, resulting in low recyclability. In addition, the recycling method involving the treatment under highly acidic condition requires complicated post-treatment of highly acidic waste liquid and has raised concerns about the environmental impact.

On the other hand, a known method for recycling the textile product including a polyester fiber and a polymer fiber in which the polyester fiber is decomposed without decomposition of a cotton fiber as the polymer fiber includes a method involving the heat treatment of the textile product under highly alkaline condition of pH 10 or higher (Patent Document 2).

CITATION LIST

PATENT DOCUMENTS

    Patent Document 1: JP-A-2019-35022
    Patent Document 2: JP-A-2021-510754

SUMMARY OF THE INVENTION

PROBLEMS TO BE SOLVED BY THE INVENTION

However, in the recycling method under highly alkaline condition, the treatment under highly alkaline condition involves the risk of damaging the polymer fiber, hence, sufficiently high recyclability has not been achieved. Further, the use of chemicals such as sodium hydroxide to make highly alkaline condition requires complicated post-treatment of waste liquid and has raised concerns about the environmental impact.

The present invention has been done against such backgrounds, and it is an object of the present invention to provide a recycling method which facilitates the recovery of a polymer material having high recyclability from a solid mixture including a polyester and the polymer material through a process with low environmental impact.

SOLUTION TO THE PROBLEMS

As a result of earnest studies to solve the above problems, the present inventors have found that, by heating a solid mixture including a polyester and a polymer material in the presence of water, the polyester melts even at a temperature lower than the melting point in air and separates together with water from the solid mixture, and the polymer material can be recovered as a solid material. The present inventors have also found that the method facilitates the recovery of a polymer material having high recyclability with low environmental impact and have completed the present invention.

The present invention has the following features.

    [1] A method for recycling a polymer material, comprising the steps of:

heating a solid mixture including a polyester and the polymer material in the presence of water;

separating the polyester and water from the solid mixture by melting; and

recovering the polymer material as a solid material,

wherein, when the polyester has Tm as a melting point in air, the polymer material has a melting point higher than the Tm of the polyester, or the polymer material has no melting point and is a solid at the Tm of the polyester, and the heating is conducted at a temperature of (the Tm - 70)°C or higher and (the Tm - 10)°C or lower.

[2] The method for recycling according to [1], wherein the heating is conducted under a pressure that is a saturated vapor pressure at a corresponding heating temperature.

[3] The method for recycling according to [1] or [2], wherein the polyester is a polyester fiber, the polymer material is at least one polymer fiber selected from the group consisting of synthetic fibers, regenerated fibers, semi-synthetic fibers, inorganic fibers, and natural fibers, and the solid mixture is a textile product including the polyester fiber and the polymer fiber.

[4] The method for recycling according to [3], wherein the polymer material is at least one natural fiber selected from the group consisting of a cotton fiber, a wool fiber, and a silk fiber.

[5] The method for recycling according to [3] or [4], wherein the polyester fiber has a circle equivalent diameter of from 1 $\mu$m to 100 $\mu$m in a cross-section, and the polymer fiber has a circle equivalent diameter of from 1 $\mu$m to 100 $\mu$m in a cross-section.

[6] The method for recycling by recovering the polymer fiber from the textile product according to any one of [3] to [5], wherein the textile product is a knitted fabric, a woven fabric, or a nonwoven fabric, and the recycled polymer fiber retains a shape of the polymer fiber included in the textile product.

[7] A recycled product including the polymer material obtained in accordance with the method for recycling according to any one of [3] to [6] as at least a part of raw materials, wherein the polymer material is the cotton fiber, and the recycled product is a recycled cotton product.

[8] A method for recycling a polyester by recovering the polyester separated from the solid mixture in accordance with the method for recycling according to any one of [1] to [6].

[9] A recycled polyester product including the polyester obtained in accordance with the method for recycling according to [8] as at least a part of raw materials.

[10] A textile product including a polymer fiber that has a melting point higher than 255°C, or that is a solid at 255°C and has no melting point, wherein the polymer fiber includes a polyester having a weight average molecular weight of 1000 or more and 10000 or less in an amount of 5% by mass or less in the polymer fiber.

EFFECTS OF THE INVENTION

According to the present invention, the recycling method which facilitates the recovery of the polymer material having high recyclability from the solid mixture including the polyester and the polymer material through a process with low environmental impact can be provided. Further, according to the present invention, the textile product formed by using the polymer fiber as the recycled product can be provided.

BRIEF DESCRIPTION OF DRAWING

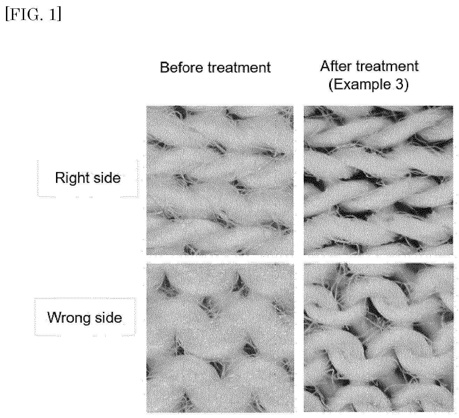

[FIG. 1] FIG. 1 is a microscope image showing knitted fabrics before and after treatment in Example 3.

DESCRIPTION OF EMBODIMENTS

<<Method for recycling polymer material>>

The method for recycling a polymer material of the present invention is characterized in that the method includes the steps of heating a solid mixture including a polyester and the polymer material in the presence of water under specific conditions, separating the polyester and water from the solid mixture by melting, and recovering the polymer material as a solid material. According to the method for recycling the polymer material of the present invention, a highly recyclable polymer material can be readily obtained with low environmental impact. Further, the polyester separated according to the method for recycling the polymer material of the present invention is separated from the solid mixture by melting and is not completely decomposed, hence, the recovered polyester can be recycled usefully.

<Polyester>

The polyester included in the solid mixture is not particularly limited and may be a polymer compound having an ester bond in the main chain formed by polycondensation of a dicarboxylic acid component and a diol component. Examples of the dicarboxylic acid component include terephthalic acid, isophthalic acid, phthalic acid, and naphthalenedicarboxylic acid, and derivatives thereof. Examples of the diol component include ethylene glycol, 1,3-propanediol, butylene glycol, polyethylene glycol, diethylene glycol, and neopentyl glycol, and derivatives thereof.

The polyester is preferably a polyester formed from an aromatic dicarboxylic acid as a dicarboxylic acid component. As the polyester, specifically, polyethylene terephthalate, polytrimethylene terephthalate, polybutylene terephthalate, and polyethylene-2,6-naphthalate are preferred, polyethylene terephthalate and polyethylene-2,6-naphthalate are more preferred, and polyethylene terephthalate is further preferred.

The polyester may be a homopolyester or a copolyester. The polyester may include a third component as a copolymer component, after the dicarboxylic acid component and the diol component. As the polyester, specifically, a polyester that contains polyethylene terephthalate as its main component is preferred, and the content of the polyethylene terephthalate in the polyester is more preferably 70% by mass or more, further preferably 80% by mass or more, further more preferably 90% by mass or more, and the content may be 100% by mass. Accordingly, the content of the polyethylene terephthalate in the polyester is preferably from 70% by mass to 100% by mass, more preferably from 80% by mass to 100% by mass, and further preferably from 90% by mass to 100% by mass.

The polyester has a melting point (accordingly, the melting point of the polyester under atmospheric conditions, hereinafter may be referred to as "Tm") in air of preferably from 200°C to 280°C, more preferably 210°C or higher, further preferably 220°C or higher, further more preferably 240°C or higher, and more preferably 275°C or lower, further preferably 270°C or lower. Accordingly, the Tm is more preferably from 210°C to 275°C, further preferably from 220°C to 275°C, and further more preferably from 240°C to 270°C.

The shape of the polyester in the solid mixture is not particularly limited as long as the polyester is a solid material. The polyester in the solid mixture may have, for example, a granular shape, a fibrous shape, a film shape, a sheet shape, or an irregular shape, and the polyester is preferably a polyester fiber.

The polyester fiber may be a staple fiber or a filament, and the polyester fiber may be or may not be crimped. The polyester fiber may be a solid fiber or a hollow fiber, or a conjugated fiber of, for example, a core-sheath type or an eccentric type. When the polyester fiber is a conjugated fiber with a polymer compound other than polyester, the content of the polymer compound other than polyester in the fiber is preferably 40% by mass or less, more preferably 30% by mass or less, further preferably 20% by mass or less, further more preferably 10% by mass or less, and the lower limit may be more than 0% by mass, or may be 0.01% by mass. Accordingly, when the polyester fiber is the conjugated fiber with the polymer compound other than polyester, the content of the polymer compound in the fiber is preferably from 0.01% by mass to 40% by mass, more preferably from 0.01% by mass to 30% by mass, further preferably from 0.01% by mass to 20% by mass, and further more preferably from 0.01% by mass to 10% by mass.

The cross-sectional shape of the polyester fiber is not particularly limited, and may be circular, polygonal, or irregular. The polyester fiber has a circle equivalent diameter of preferably from 1 $\mu$m to 100 $\mu$m, more preferably 5 $\mu$m or more, further preferably 10 $\mu$m or more, and more preferably 90 $\mu$m or less, further preferably 80 $\mu$m or less, further more preferably 70 $\mu$m or less in a cross-section. Accordingly, the polyester fiber has a circle equivalent diameter of more preferably from 5 $\mu$m to 90 $\mu$m, further preferably from 5 $\mu$m to 80 $\mu$m, and further more preferably from 10 $\mu$m to 70 $\mu$m in a cross-section. By adjusting the circle equivalent diameter in a cross-section of the polyester fiber within the range, the polyester can be easily separated from the solid mixture by melting. The circle equivalent diameter in the cross-section of a fiber can be determined, for example, by visual inspection using an electron microscope, or by calculation based on fineness and density of a material forming a fiber.

<Polymer material>

The polymer material is not particularly limited as long as the polymer material has a melting point in air that is higher than the above Tm, or the polymer material has no melting point and is a solid at the Tm, and a polymer and the polymer material with such a characteristic are hereinafter referred to as a polymer A and a polymer material A, respectively. Due to the characteristic of the polymer material A regarding the melting point, the polymer material A does not melt even when the polyester melts, and the polymer material A can be recovered as the solid material from the solid mixture.

When the polymer material A has a melting point, the melting point is preferably (the Tm + 5)°C or higher, more preferably (the Tm + 10)°C or higher, and the melting point may be (the Tm + 20)°C or lower, though the upper limit is not particularly limited. Accordingly, when the polymer material A has a melting point, the melting point is preferably from (the Tm + 5)°C to (the Tm + 20)°C, and more preferably from (the Tm + 10)°C to (the Tm + 20)°C. According to the method for recycling the polymer material of the present invention, the polymer material A can be recovered as the solid material even when the difference between melting points of the polyester and the polymer material A is small, because the polyester melts at a temperature lower than the melting point.

The polymer material A includes a material, for example, formed from a polymer A compound with a molecular weight of more than 10000, and the polymer material A may be any one of a synthetic material, a regenerated material, a semi-synthetic material, or a natural material. Specific examples of the synthetic material include resins other than the above polyester such as polyolefin, polystyrene, polyamide, polyimide, polyamide-imide, polyvinyl alcohol, polyurethane, polyvinyl acetate, polyvinyl chloride, polyvinylidene chloride, polycarbonate, acrylic resin, and phenolic resin; rubbers such as a silicon rubber and a fluorocarbon rubber; and derivatives, modified products, copolymers, and mixtures thereof. Examples of the regenerated material include rayon and cupula. Examples of the semi-synthetic material include acetate and promix. Examples of the natural material include vegetable fibers such as cotton and hemp; silk; animal hairs such as wool, cashmere, angora, mohair, alpaca, and camel; and polysaccharides such as cellulose, chitin, and chitosan; and proteins such as sericin, fibroin, keratin, and casein. As the polymer material A, the natural material is preferred. Although the synthetic material, the regenerated material, and the semi-synthetic material are easy to reconstitute by polymerization even after being decomposed, the natural materials such as cotton and animal hair are difficult to reconstitute after being decomposed. However, the method according to the present invention is advantageous in recycling the polymer material A because the decomposition of the polymer material A is prevented.

The shape of the polymer material A in the solid mixture is not particularly limited as long as the polymer material A is the solid material. The shape of the polymer material A in the solid mixture may have, for example, a granular shape, a fibrous shape, a film shape, a sheet shape, or an irregular shape, and a fibrous shape is preferred. As the polymer material A (polymer A fiber) in the fibrous shape, natural fibers such as a vegetable fiber and an animal fiber; synthetic fibers such as an acrylic fiber, a polyurethane fiber, a flourocarbon fiber, a phenol fiber, a polyamide fiber, a polyimide fiber, and a polyamide-imide fiber; regenerated fibers such as a rayon fiber, a lyocell fiber, and a cupra fiber; semi-synthetic fibers such as an acetate fiber, a triacetate fiber, and a promix fiber; and inorganic fibers such as a glass fiber are preferred, the natural fibers are more preferred, a cotton fiber, a silk fiber, and a wool fiber are further preferred, and the cotton fiber is further more preferred.

The polymer A fiber may be a staple fiber or a filament, and the polymer A fiber may be or may not be crimped. The polymer A fiber may be a solid fiber or a hollow fiber, or a conjugated fiber of, for example, a core-sheath type or an eccentric type.

The cross-sectional shape of the polymer A fiber is not particularly limited, and may be circular, polygonal, or irregular. The polymer A fiber has a circle equivalent diameter of preferably from 1 $\mu$m to 100 $\mu$m, more preferably 5 $\mu$m or more, further preferably 10 $\mu$m or more, and more preferably 90 $\mu$m or less, further preferably 80 $\mu$m or less, further more preferably 70 $\mu$m or less in a cross-section. Accordingly, the polymer A fiber has a circle equivalent diameter of more preferably from 5 $\mu$m to 90 $\mu$m, further preferably from 5 $\mu$m to 80 $\mu$m, and further more preferably from 10 $\mu$m to 70 $\mu$m in a cross-section. By adjusting the circle equivalent diameter in a cross-section of the polymer A fiber within the range, it becomes easier to recover the polymer A fiber as the solid material from the solid mixture.

<Solid mixture>

The solid mixture is not particularly limited as long as the solid mixture is a solid material including the polyester and the polymer material A. The solid mixture is preferably a highly sophisticated combination of the polyester and the polymer material A, for example, preferably a fiber-reinforced material including the polymer A fiber and the polyester in combination, or a composite material such as a textile product including the polyester fiber and the polymer A fiber in combination, and is more preferably a textile product. Since the polyester can be melted and separated at a temperature that is lower than the melting point in air in the present invention, the polymer material A can be easily recovered even from the composite material with minimal environmental impact.

In the above textile product, a yarn that includes the polyester fiber and does not include the polymer A fiber (hereinafter, merely "a polyester yarn"), a yarn that includes the polymer A fiber and does not include the polyester fiber (hereinafter, merely "a polymer yarn"), and a yarn that includes the polyester fiber and the polymer A fiber (hereinafter, merely "a conjugated yarn") may be used. The polyester yarn may be either a spun yarn or a filament yarn. The polymer yarn may be either a spun yarn or a filament yarn, and the polymer yarn is preferably a spun yarn when the polymer yarn is formed from the natural fiber other than the silk fiber.

The polyester yarn may be a single yarn or a mixed yarn with a yarn other than the polymer yarn. The polymer yarn may be a single yarn or a mixed yarn with a yarn other than the polyester yarn.

The conjugated yarn may be a blended yarn formed from, for example, a polyester staple fiber and a polymer A staple fiber, a multifilament yarn or a combined filament yarn formed from a polyester filament and a polymer A filament, or a core-spun yarn formed from a polyester staple fiber and a polymer A elastomeric filament (for example, a polyurethane elastomeric fiber). Furthermore, the conjugated yarn may be a mixed yarn formed from the polyester yarn (either a spun yarn or a filament yarn) and the polymer yarn (either a spun yarn or a filament yarn, preferably a spun yarn). Examples of the mixed yarn include twisted union yarns (mixed and twisted yarns such as a two folded yarn, a three folded yarn, and a four folded yarn), covered yarns, and paralleled yarns. From the viewpoint of making effective use of the polymer A staple fiber, the blended yarn and the mixed yarn are preferred, and the blended yarn and the twisted union yarn are more preferred.

The fineness of the conjugated yarn is, for example, from 0.1 tex to 5000 tex, preferably from 1 tex to 3000 tex, and more preferably from 3 tex to 1500 tex. The polyester fiber can be removed with a high removal rate, regardless of the fineness of the conjugated yarn.

When the textile product is formed from the polyester yarn and the polymer yarn, the conjugated yarn of the polyester fiber and the polymer A fiber is not necessarily included in the textile product. However, the textile product is preferably formed by including the conjugated yarn of the polyester fiber and the polymer A fiber, and the conjugated yarn more preferably accounts for 50% by mass or more of all the yarns forming the textile product. According to the present invention, even when the polyester fiber and the polymer A fiber are intricately interlaced to form a conjugated yarn, the polyester can be readily separated with low environmental impact, and the polymer material A can be easily recovered. Since the polyester is separated by melting, the polyester is not completely decomposed, and the separated polyester can be recovered for recycling usefully.

Examples of the textile product include knitted fabrics, woven fabrics (woven cloths), and nonwoven fabrics, and knitted fabrics and woven fabrics are preferred. Furthermore, the textile product may have a laminated structure including a plurality of fabrics in either the layer direction or the plane direction when the fabrics are two or more fabrics selected from knitted fabrics, woven fabrics, and nonwoven fabrics.

The knitted fabric may be formed from a single yarn or two or more yarns. When the knitted fabric is formed from a single yarn, the knitted fabric is preferably formed from a conjugated yarn including the polyester fiber and the polymer A fiber. When the knitted fabric is formed from two or more yarns, the polyester yarn, the polymer yarn, and the conjugated yarn may be appropriately used.

The knit structure is not particularly limited, and the knit structure may be formed by either flat knitting or warp knitting. Examples of the flat knitting pattern include plain stitches (stockinette stitch and jersey stitch), rib stitch (cardigan stitch), purl stitch, and interlock stitch. Examples of the warp knitting include single tricot stitch, single cord stitch, half tricot stitch, plain tricot stitch, and queens cord stitch.

The woven fabric may be a blended yarn fabric (particularly, a fabric formed by using a blended yarn including the polyester fiber and the polymer A fiber), or a union cloth (in particular, a union cloth formed by using a twisted union yarn consisting of the polyester yarn and the polymer yarn; a union cloth formed by using either the polyester yarn or the polymer yarn as the warp yarn and the other as the weft yarn; a union cloth formed by using either the polyester yarn or the polymer yarn as the warp while partially interlacing the other).

The weave patterns of the woven fabric is not particularly limited. Examples of the weave patterns include a plain weave, a twill weave, a sateen weave, and derivative weaves obtained by appropriately modifying and/or combining three these foundation weaves (for example, single-layer special weaves such as a honey comb weave, a checkerboard weave, and a jacquard weave; and combination weaves such as a double weave and a pique weave), and examples of the fabric further include a pile fabric, a weft pile woven fabric, a warp pile woven fabric, a towel woven fabric, and a leno cloth.

Examples of the nonwoven fabrics include an air-through nonwoven fabric, a spunbond nonwoven fabric, a spunlace nonwoven fabric, a meltblown nonwoven fabric, a resin-bonded nonwoven fabric, and a needlepunched nonwoven fabric.

In the solid mixture, the content of the polyester is preferably from 1 part by mass to 100 parts by mass, more preferably 1.5 parts by mass or more, further preferably 3.0 parts by mass or more, and more preferably 80 parts by mass or less, further preferably 70 parts by mass or less, further more preferably 60 parts by mass or less based on 100 parts by mass of the polymer material A. Accordingly, the content of the polyester is more preferably from 1.5 parts by mass to 80 parts by mass, further preferably from 1.5 parts by mass to 70 parts by mass, and further more preferably from 3.0 parts by mass to 60 parts by mass based on 100 parts by mass of the polymer material A. By adjusting the content of the polyester within the range, it becomes easier to separate the polyester from the solid mixture by melting and recovering the polymer material A as the solid material.

In the solid mixture, the content of the polymer material A based on the total mass of the solid mixture is preferably 20% by mass or more, more preferably 30% by mass or more, further preferably 40% by mass or more, further more preferably 50% by mass or more, still further preferably 60% by mass or more, and the content may be less than 100% by mass, preferably 98% by mass or less, and more preferably 95% by mass or less. Accordingly, the content of the polymer material A based on the total mass of the solid mixture is preferably from 20% by mass to 98% by mass, more preferably from 30% by mass to 98% by mass, further preferably from 40% by mass to 98% by mass, further more preferably from 50% by mass to 98% by mass, and still further preferably from 60% by mass to 95% by mass. By adjusting the content of the polymer material A within the range, it becomes easier to separate the polyester from the solid mixture by melting and recovering the polymer material A as the solid material.

The solid mixture may contain a component other than the polyester and the polymer material A. Examples of other components include a polymer material having a melting point in air that is equal to or lower than the melting point of the polyester (a polymer material having a low melting point), a pigment, a dye, a stabilizer, a tackifier, a plasticizer, an anti-degradation agent, a filler, an ultraviolet absorber, an antioxidant, an antibacterial agent, an anti-static agent, and a lubricant. One or two or more of these components may be included in the solid mixture.

The above polymer material having a low melting point is removed with the polyester by melting, and thus does not interfere with the recycling of the polymer material A. However, a small amount of the polymer material having a low melting point is preferred to reduce the risk of contamination of the recovered polyester by the polymer material having a low melting point. The content of the polymer material having a low melting point is, for example, 80 parts by mass or less, preferably 50 parts by mass or less, more preferably 20 parts by mass or less, and most preferably 0 parts by mass based on 100 parts by mass of the polyester. Accordingly, the content of the polymer material having a low melting point is preferably from 0 parts by mass to 80 parts by mass, more preferably from 0 parts by mass to 50 parts by mass, further preferably from 0 parts by mass to 20 parts by mass, and most preferably 0 parts by mass based on 100 parts by mass of the polyester.

The total content of the components other than the polymer material having a low melting point is preferably 10% by mass or less, more preferably 8% by mass or less, further preferably 5% by mass or less, further more preferably 2% by mass or less in the solid mixture. Accordingly, the total content of the components other than the polymer material having a low melting point is preferably from 0% by mass to 10% by mass, more preferably from 0% by mass to 8% by mass, further preferably from 0% by mass to 5% by mass, and further more preferably from 0% by mass to 2% by mass in the solid mixture.

<Treatment of solid mixture>

The solid mixture is subjected to the heat treatment at a temperature of (the Tm - 70)°C or higher and (the Tm - 10)°C or lower in the presence of water to remove the polyester and water from the solid mixture by melting, and the polymer material A is recovered as a solid material. The term "solid material" as used herein describes the state where the shape before heating is retained, unlike decomposed products.

In the method for recycling the polymer material of the present invention, the solid mixture may be placed into a processing tank with water, or the solid mixture may be placed into a processing tank and then water vapor may be added using a boiler such as a high-pressure boiler, followed by the treatment. In either method, adjustments should be made to ensure that the predetermined temperature is reached in the presence of water.

The method for recycling the polymer material of the present invention may include a step of washing the solid mixture before the heat treatment. Washing of the solid mixture can reduce the above other components other than the polyester and the polymer material A contained in the solid mixture. As a washing solution, for example, water and an organic solvent may be used. The organic solvent is not particularly limited and may be appropriately selected according to the component to be reduced, and a non-polar solvent, for example, a hydrocarbon-based solvent, is preferred. Only one type of the washing solution may be used, or two or more types of the washing solution may be used in combination.

As the washing method, the solid mixture may be immersed in the washing solution, or the washing solution may be sprayed onto the solid mixture. In the case of the washing involving the immersion of the solid mixture in the washing solution, the immersion may be conducted with stirring. The temperature of the washing step is preferably from 5°C to 60°C, and more preferably from 5°C to 40°C. In the case of washing involving immersion, the solid mixture and the washing solution may be separated by a known solid liquid separation method.

After the washing, the solid mixture may be subjected directly to the heat treatment, or, prior to the heat treatment, it may undergo a drying treatment, for example, at a temperature of from 40°C to 80°C for 1 minute to 60 minutes using a known dryer such as a hot air dryer.

The water used in the heat treatment is not particularly limited. For example, industrial water or tap water may be used, or distilled water or ion-exchange water may be used, if needed. The amount of the water used in the heat treatment is not particularly limited. To the volume of the reaction chamber (processing tank), preferably 30% or more, more preferably 45% or more, and further preferably 60% or more of the volume of water is used. Preferred amount of water used varies with the volume of a reaction chamber used, and the amount of water sufficient to reach a saturated vapor pressure in the heat treatment is particularly preferred.

The heat treatment is conducted under a condition of preferably from pH 5.8 to pH 8.6, and more preferably from pH 6.0 to pH 8.4. Instead of highly acidic condition or highly alkaline condition, the treatment is conducted at a pH within the range described above, therefore, the method for recycling the polymer material of the present invention does not require any post-treatment such as neutralization of the waste liquid, enabling a simple process with low environment impact.

When the pH is within the above range, the water used in the heat treatment may contain components other than water, such as a solvent other than water, a surfactant, an organic component, an inorganic component, and acid, and these components other than water are not preferably contained. The content of the components other than water in the treatment liquid is preferably 10% by mass or less, more preferably 5% by mass or less, and further preferably 3% by mass or less. Accordingly, the content of the components other than water in the treatment liquid is preferably from 0% by mass to 10% by mass, more preferably from 0% by mass to 5% by mass, and further preferably from 0% by mass to 3% by mass.

The heat treatment temperature is (the Tm - 70)°C or higher and (the Tm - 10)°C or lower, preferably (the Tm - 60)°C or higher, more preferably (the Tm-50)°C or higher, further preferably (the Tm - 30)°C or higher, and preferably (the Tm - 15)°C or lower, more preferably (the Tm - 20)°C or lower. Accordingly, the heat treatment temperature is preferably from (the Tm - 60)°C to (the Tm - 15)°C, more preferably from (the Tm - 50)°C to (the Tm - 15)°C, and further preferably from (the Tm - 30)°C to (the Tm - 20)°C. When the temperature is within the range, melting of the polyester progresses faster than the decomposition of the polymer material A, hence, the polymer material A can be recovered from the solid mixture as the solid material that retains the shape of the polymer material A before the treatment.

Since the heat treatment is conducted in the presence of water in the present invention, the polyester can melt effectively at a temperature even in the range of the above described heat treatment temperature. If the heat treatment is conducted under atmospheric conditions, the polyester does not melt at a temperature within the above range of heating temperature, and the polyester cannot be removed from the solid mixture. When the polymer material A is a natural fiber, the heat treatment under atmospheric conditions may cause discoloration of the natural fiber. However, the heat treatment conducted in the presence of water can prevent the discoloration of the natural fiber, allowing the natural fiber having higher recyclability to be recovered.

A known heating method may be used in the heat treatment. The method includes one method supplying high-pressure steam from a boiler and another method utilizing a heater.

The heat treatment is preferably conducted under pressure, more preferably under pressure that is the saturated vapor pressure at a corresponding heating temperature. For example, when the polyester included in the solid mixture is polyethylene terephthalate (PET) with the melting point of 255°C, the heat treatment temperature is 185°C or higher and 245°C or lower, and the saturated vapor pressure calculated according to the Wagner equation are 1.124561 MPa at 185°C and 3.65425 MPa at 245°C. Hence, when the solid mixture includes PET as the polyester, the pressure in the heat treatment is preferably 1.124561 MPa or more and 3.65425 MPa or less.

The heat treatment time may be appropriately selected according to the combinations of the polyester and the polymer material A. The heat treatment time is preferably from 3 minutes to 400 minutes, more preferably from 5 minutes to 350 minutes, and further preferably from 5 minutes to 100 minutes. By adjusting the heat treatment time within the above range, the polyester can sufficiently melt while the decomposition of the polymer material A is being prevented, and the polymer material A can be recovered as the solid material by separating the polyester from the solid mixture.

The heating time taken from (the Tm - 100)°C to the heat treatment temperature is preferably 60 minutes or shorter, and more preferably 30 minutes or shorter. The time taken to return to (the Tm -100)°C after the heat treatment is preferably 60 minutes or shorter, and more preferably 30 minutes or shorter. After the heat treatment, cooling may be conducted by natural cooling, or by using a known cooling device.

For example, the heating temperature and the heating time in the heat treatment of the solid mixture including the polyester fiber as the polyester and the natural fiber as the polymer material A is preferably any one of the following (1) to (6), more preferably any one of the following (2) to (5), and further preferably the following (4):

(1) the heating temperature is 190°C or higher and 200°C or lower, and the heating time is 10 minutes or longer and 350 minutes or shorter;
(2) the heating temperature is higher than 200°C and 210°C or lower, and the heating time is 10 minutes or longer and 180 minutes or shorter;
(3) the heating temperature is higher than 210°C and 220°C or lower, and the heating time is 5 minutes or longer and 100 minutes or shorter;
(4) the heating temperature is higher than 220°C and 230°C or lower, and the heating time is 5 minutes or longer and 50 minutes or shorter;
(5) the heating temperature is higher than 230°C and 240°C or lower, and the heating time is 5 minutes or longer and 30 minutes or shorter;, and
(6) the heating temperature is higher than 240°C and 245°C or lower, and the heating time is 5 minutes or longer and 20 minutes or shorter.

The polyester melted by the heat treatment is separated from the solid mixture by water convection generated by heating. Further, the separation of the melted polyester from the solid mixture may be promoted by applying an external force, such as stirring, during the heat treatment.

After the heat treatment, the polymer material A as the solid material is recovered. The method for the recovery is not particularly limited. Since the polymer material A retains the shape before the treatment, the polymer material A may be recovered, for example, by simply removing it from the treatment liquid containing the polyester, or by a known solid liquid separation treatment, such as filtration. In addition, the melted polyester solidifies during cooling of the treatment liquid to an ambient temperature after the heat treatment. Accordingly, when the polymer material A is recovered from the treatment liquid by filtration, the filter medium preferably has a pore size that prevents the passage of the polymer material A while allowing the solidified polyester to pass through. The pore size of the filter medium is preferably 50 mm or less, more preferably 30 mm or less, and preferably 1 mm or more, more preferably 5 mm or more. Accordingly, the pore size of the filter medium is preferably from 1 mm to 50 mm, and more preferably from 5 mm to 30 mm.

The recovered polymer material A may be subjected to a post-treatment such as washing using a washing solution, for example, water or an organic solvent, and drying. By including the step of washing, the amount of the solidified polyester remaining in the polymer material A can be reduced. The above organic solvent is not particularly limited, and is preferably a non-polar solvent, for example, a hydrocarbon-based solvent. Only one type of the washing solution may be used, or two or more types of the washing solution may be used in combination. As the method for washing, the polymer material A may be immersed in the washing solution, or the washing solution may be sprayed onto the polymer material A. In the case of the washing involving the immersion of the polymer material A in the washing solution, the immersion may be conducted with stirring. The temperature of the washing step is preferably from 5°C to 60°C, and more preferably from 5°C to 40°C. In the case of washing involving the immersion, the polymer material A and the washing solution may be separated by a known solid liquid separation method. The drying conditions are not particularly limited, and drying is preferably conducted using a known heating device, such as an infrared heater, oven, or hot air dryer, for example, at a temperature of from 40°C to 80°C for 1 minute to 60 minutes.

The polymer material A obtained according to the method for recycling the polymer material of the present invention is prevented from being degraded, for example, by decomposition. Due to the elimination of degradation such as decomposition, the polymer material A can retain the shape before the treatment and is highly recyclable. Particularly, when the solid mixture is a textile product, the polymer material A preferably retains the shape as a fiber or a textile product. An observation using an electron microscope may be conducted to verify whether the shape is retained.

Although the polymer material A obtained according to the method for recycling the polymer material of the present invention is preferably free of the polyester, the polymer material A may contain the polyester. The content of the polyester in the polymer material A is preferably 35% by mass or less, more preferably 20% by mass or less, further preferably 10% by mass or less, further more preferably 5% by mass or less, and still further preferably 3% by mass or less. Accordingly, the content of the polyester in the polymer material A obtained according to the recycling method is preferably from 0% by mass to 35% by mass, more preferably from 0% by mass to 20% by mass, further preferably from 0% by mass to 10% by mass, further more preferably from 0% by mass to 5% by mass, and still further preferably from 0% by mass to 3% by mass. The content of the polyester can be measured, for example, by following the method described in EXAMPLES.

The residual rate of the polyester in the polymer material A obtained according to the method for recycling the polymer material of the present invention is determined according to the following equation.

Residual rate (% by mass) = (content of polyester in polymer material after --> treatment / content of polyester in solid mixture before treatment) $\times$ 100

The residual rate is preferably 99% by mass or less, more preferably 50% by mass or less, further preferably 25% by mass or less, further more preferably 10% by mass or less, still further preferably 5% by mass or less, still further preferably 3% by mass or less, and particularly preferably 1% by mass or less. Accordingly, the residual rate is preferably from 0% by mass to 99% by mass, more preferably from 0% by mass to 50% by mass, further preferably from 0% by mass to 25% by mass, further more preferably from 0% by mass to 10% by mass, still further preferably from 0% by mass to 5% by mass, still further preferably from 0% by mass to 3% by mass, and particularly preferably from 0% by mass to 1% by mass.

Since the recovered polymer material A can be reused without additional treatments such as polymerization, the recovered polymer material A is highly recyclable. The applications of the recovered polymer material A are not particularly limited, and the recovered polymer material A may be used, for example, in material recycling due to its shape retention properties, or in chemical recycling as a monomer after depolymerization.

The polyester melted by the heat treatment may be cooled and then recovered as a solid from the treatment liquid. The polyester can be recovered, for example, by subjecting the treatment liquid after the recovery of the polymer material A to a known solid-liquid separation treatment, such as filtration and centrifugation.

The cooling may be conducted to a temperature at which the polyester solidifies, a cooling temperature is preferably 90°C or lower, more preferably 60°C or lower, further preferably 40°C or lower, or the cooling temperature may be 0°C or higher. Accordingly, the cooling temperature is preferably from 0°C to 90°C, more preferably from 0°C to 60°C, and further preferably from 0°C to 40°C. The method for cooling is not particularly limited, and the polyester may be cooled by natural cooling, or by using a known cooling device. When the solidified polyester is recovered by filtration, the filter material may have a pore size that prevents the passage of the solidified polyester, and the pore size is preferably 0.1 mm or less, more preferably 50 $\mu$m or less, and preferably 0.1 $\mu$m or more. Accordingly, the filter material has a pore size of preferably from 0.1 $\mu$m to 0.1 mm, and more preferably from 0.1 $\mu$m to 50 $\mu$m.

The recovered polyester has a weight average molecular weight of preferably 1000 or more, more preferably 1100 or more, further preferably 1200 or more, and preferably 10000 or less, more preferably 9500 or less, and further preferably 9000 or less. Accordingly, the recovered polyester has a weight average molecular weight of preferably from 1000 to 10000, more preferably from 1100 to 9500, and further preferably from 1200 to 9000.

Since the polyester is separated from the solid mixture by melting, the recovered polyester is not completely decomposed, and the recovered polyester can have the weight average molecular weight within the above range. The weight average molecular weight of the polyester can be determined by gel permeation chromatography (GPC).

The applications of the recovered polyester are not particularly limited, and the recovered polyester may be depolymerized and used as a monomer in chemical recycling.

In the chemical recycling, either repolymerization or copolymerization, or both repolymerization and copolymerization may be conducted, and a recycled polyester product containing the recovered polyester as at least a part of raw materials can be obtained.

<Recycled polymer fiber>

When the polymer A fiber is recovered from the textile product as the solid mixture according to the method of the present invention (hereinafter, the polymer A fiber obtained according to the method of the present invention may be referred to as a recycled polymer fiber), the recycled polymer fiber preferably retains a shape of the polymer fiber included in the textile product. For example, when the textile product is knitted fabric, the recycled polymer fiber preferably retains the shape of a knitting pattern (loop).

The recycled polymer fiber preferably has a melting point higher than 255°C, or is preferably a fiber that is a solid at 255°C and has no melting point, and the recycled polymer fiber is particularly preferably a cotton fiber.

The recycled polymer fiber may contain a polyester originating from the solid mixture, and the content of the polyester is preferably 5% by mass or less. The weight average molecular weight of the polyester contained is preferably 1000 or more and 10000 or less.

The recycled polymer fiber may be reused as an individual fiber, a blended yarn blended with another fiber, or a cushioning filler.

Since the degradation of the recycled polymer fiber is eliminated, the textile product including the recycled polymer fiber is satisfactory in durability and appearance as a product.

For example, when the recycled polymer fiber is a cotton fiber, recycled cotton products such as a knitted fabric, a woven fabric, and a nonwoven fabric including the cotton fiber as at least a part of raw materials can be formed.

The present application claims benefit of priority to Japanese Patent Application No. 2022-121193 filed on July 29, 2022. The entire contents of the specification of Japanese Patent Application No. 2022-121193 filed on July 29, 2022, are incorporated herein by reference.

EXAMPLES

Hereinafter, the present invention will be more specifically described with Examples, and the scope of the present invention is not limited by Examples. The present invention can be carried out with modifications within a range conforming to the gist described above and/or below, all of which are included in the technical scope of the present invention.

<Circle equivalent diameter in a fiber cross-section>

The circle equivalent diameter was measured from the enlarged image (1000x) of the fiber cross-section taken by a scanning electron microscope (model: S-4800, manufactured by Hitachi High-Tech).

<Content of polyester>

The content of the polyester in a sample was evaluated using a 600 MHz nuclear magnetic resonance system (model: AVANCE NEO 600, manufactured by Bruker Corporation). The measurement was conducted under conditions of acquisition time of 4 seconds, relaxation delay of 5 seconds, using a solvent of chloroform-d/hexafluoroisopropanol-d = 90/10 (volume ratio).

The quantification method is as follows. First, weighed sample and 2 mg of dimethyl isophthalate (DMI) as a standard sample for quantification were added to a solvent, and the resulting solution was subjected to measurement. From the resulting spectrum, peak integral values of peaks of corresponding polyester components, as well as peak integral values of peaks of water and DMI contained in the sample were calculated, and a relative amount of substance and relative mass ($W_a$) were calculated from a proton count of each peak. For example, in the case of polyethylene terephthalate, peaks of substances, specifically, the peak of terephthalic acid was identified at 8.08 ppm with a proton count of 4, the peak of ethylene glycol was identified at 4.70 ppm with a proton count of 4, and the peak of diethylene glycol was identified at 3.92 ppm with a proton count of 4, based on the peak of chloroform-d at 7.28 ppm, and the relative mass (Wa) was determined from each of the peak integral values.

Peak integral value/proton count of corresponding peak of substance = relative amount of substance

Relative amount of substance × molecular weight = relative mass (Wa)

The sum of relative mass of each component of the polyester was represented by Wa [polyester]. From the ratio of Wa [DMI] of DMI and the mass of DMI actually added represented by Wb [DMI], the mass of the polyester contained in the sample (Wb [polyester]) and the mass of water contained in the sample (Wb [water]) were determined.

$$\text{Wa [X]} \times \text{Wb [DMI]} / \text{Wa [DMI]} = \text{Wb [X] (mg)}$$

(In the above formula, X represents polyester or water.)

The content (% by mass) of the polyester in the sample was evaluated from value obtained by subtracting the mass of the water from the mass of the evaluated sample, and the mass of the polyester.

Content of polyester (% by mass) = Wb [polyester]/(Wb [sample] - Wb [water]) × 100

<Residual rate of polyester in sample>

The residual rate of the polyester in the sample was determined according to the following equation.

Residual rate (% by mass) = (content of polyester in polymer material after treatment/content of polyester in solid mixture before treatment) × 100

<Shape retention properties of polymer material>

The state of the sample in the processing tank after heat treatment was classified into any two or more states of a solid in the form of cloth with meshes observable by a microscope, a solid in the form of powder, and liquid. The degree of damage to the sample due to the treatment was judged based on the state of the sample as a solid in the form of cloth, as described below.

(Evaluation of the state of cloth)

Good: The sample can be removed with tweezers and tears and holes account for less than 10% of the area of the cloth.

Acceptable: Although the sample can be removed with tweezers, tearing occurs, or tears and holes account for 10% or more of the area of the recovered cloth.

Bad: The sample cannot be removed with tweezers, or no solid in the form of cloth exist.

(Example 1)

To obtain a knitted fabric, 66% by mass of a yarn consisting of a polyethylene terephthalate fiber and 34% by mass of a spun yarn consisting of a cotton fiber were interlaced. The polyethylene terephthalate fiber had a circle equivalent diameter in a cross-section of 20 μm, and a melting point in air of 255°C. The cotton fiber had a circle equivalent diameter in a cross-section of 20 μm, and had no melting point and was a solid at 255°C.

The knitted fabric was placed in a reaction chamber with a volume of 500 mL together with 300 mL of water, and the mixture was heated to 200°C. At that time, the pressure was 1.6 MPa. After the pressurization, the heat treatment was conducted in the presence of water for 10 minutes. Subsequently, the pressure was reduced to atmospheric pressure to recover the sample (a polymer material), and the sample was evaluated in each item. The evaluation results are presented in Table 1.

(Examples 2 to 6 and Comparative Examples 1 and 2)

The knitted fabrics obtained in Example 1 were subjected to heat treatment in the same manner as Example 1 except that the treatment conditions (temperature, pressure, time) were changed to those shown in Table 1, and the recovered samples were evaluated in various items. The evaluation results are presented in Table 1. FIG. 1 shows microscope images of the knitted fabric before and after treatment in Example 3.

[Table 1]

|  | Example 1 | Example 2 | Example 3 | Example 4 | Example 5 | Example 6 | Comparative Example 1 | Comparative Example 2 |
|---|---|---|---|---|---|---|---|---|
| Polyester | PET fiber | PET fiber | PET fiber | PET fiber | PET fiber | PET fiber | PET fiber | PET fiber |
| Polymer material | Cotton fiber | Cotton fiber | Cotton fiber | Cotton fiber | Cotton fiber | Cotton fiber | Cotton fiber | Cotton fiber |
| Treatment temperature (°C) | 200 | 220 | 230 | 240 | 230 | 230 | 180 | 250 |
| Treatment pressure (MPa) | 1.6 | 2.3 | 2.8 | 3.3 | 2.8 | 2.8 | 1.0 | 4.0 |
| Temperature rise rate (°C/min) | 3 | 3 | 3 | 3 | 3 | 3 | 3 | 3 |
| Treatment time (min) | 10 | 10 | 10 | 10 | 15 | 20 | 10 | 10 |
| Polyester content in recovered polymer material (%) | 33 | 17 | 0.3 | 0.4 | 0.3 | 0.2 | 34 | - |
| Residual rate of polyester (%) | 99 | 50 | 1 | 1 | 1 | 1 | 100 | - |
| Shape retention properties of recovered polymer material | Good | Good | Good | Acceptable | Good | Good | Good | Bad |

As shown in Table 1, the polymer materials recovered in Examples 1 to 6 had reduced contents of the polyester compared to the knitted fabrics before the treatment, further, the polymer materials were not decomposed, and the polymer materials retained their shapes as the knitted fabrics above a certain level. In contrast, in Comparative Example 1, the polymer material retained its shape as the knitted fabric due to low temperature during the heat treatment, but the reduction of the polyester was not observed. In Comparative Example 2, the polymer material was decomposed due to high temperature during the heat treatment and was not recovered as a solid in the form of cloth.

**Claims**

1. A method for recycling a polymer material, comprising the steps of:
   heating a solid mixture including a polyester and the polymer material in the presence of water;

   separating the polyester and water from the solid mixture by melting; and
   recovering the polymer material as a solid material,
   wherein, when the polyester has Tm as a melting point in air, the polymer material has a melting point higher than the Tm of the polyester, or the polymer material has no melting point and is a solid at the Tm of the polyester, and the heating is conducted at a temperature of (the Tm - 70)°C or higher and (the Tm - 10)°C or lower.

2. The method for recycling according to claim 1, wherein the heating is conducted under a pressure that is a saturated vapor pressure at a corresponding heating temperature.

3. The method for recycling according to claim 1 or 2, wherein the polyester is a polyester fiber, the polymer material is at least one polymer fiber selected from the group consisting of synthetic fibers, regenerated fibers, semi-synthetic fibers, inorganic fibers, and natural fibers, and the solid mixture is a textile product including the polyester fiber and the polymer fiber.

4. The method for recycling according to claim 3, wherein the polymer material is at least one natural fiber selected from the group consisting of a cotton fiber, a wool fiber, and a silk fiber.

5. The method for recycling according to claim 3, wherein the polyester fiber has a circle equivalent diameter of from 1 $\mu$m to 100 $\mu$m in a cross-section, and the polymer fiber has a circle equivalent diameter of from 1 $\mu$m to 100 $\mu$m in a cross-section.

6. The method for recycling by recovering the polymer fiber from the textile product according to claim 3, wherein the textile product is a knitted fabric, a woven fabric, or a nonwoven fabric, and the recycled polymer fiber retains a shape of the polymer fiber included in the textile product.

7. A recycled product including the polymer material obtained in accordance with the method for recycling according to claim 4 as at least a part of raw materials,
wherein the polymer material is the cotton fiber, and the recycled product is a recycled cotton product.

8. A method for recycling a polyester by recovering the polyester separated from the solid mixture in accordance with the method for recycling according to claim 1 or 2.

9. A recycled polyester product including the polyester obtained in accordance with the method for recycling according to claim 8 as at least a part of raw materials.

10. A textile product including a polymer fiber that has a melting point higher than 255°C, or that is a solid at 255°C and has no melting point,
wherein the polymer fiber includes a polyester having a weight average molecular weight of 1000 or more and 10000 or less in an amount of 5% by mass or less in the polymer fiber.

[FIG. 1]

|  | Before treatment | After treatment (Example 3) |
|---|---|---|
| Right side | | |
| Wrong side | | |

## INTERNATIONAL SEARCH REPORT

| International application No. |
|---|
| **PCT/JP2023/026272** |

| | |
|---|---|
| **A.** | **CLASSIFICATION OF SUBJECT MATTER** |
| | ***C08J 11/14***(2006.01)i; ***B29B 17/00***(2006.01)i; ***D06M 11/05***(2006.01)i<br>FI:  C08J11/14 ZAB; B29B17/00; D06M11/05 |
| | According to International Patent Classification (IPC) or to both national classification and IPC |

| | |
|---|---|
| **B.** | **FIELDS SEARCHED** |
| | Minimum documentation searched (classification system followed by classification symbols)<br>    C08J11/14; B29B17/00; D06M11/05 |
| | Documentation searched other than minimum documentation to the extent that such documents are included in the fields searched<br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023 |
| | Electronic data base consulted during the international search (name of data base and, where practicable, search terms used) |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2005-330211 A (TOYOHASHI UNIVERSITY OF TECHNOLOGY) 02 December 2005 (2005-12-02)<br>    claims, paragraphs [0001], [0007], [0009], [0013], [0016]-[0020] | 1-2 |
| A | | 3-9 |
| X | WO 2015/137365 A1 (NITTO DENKO CORPORATION) 17 September 2015 (2015-09-17)<br>    paragraphs [0012], [0058]-[0063], [0069] | 1-2 |
| A | | 3-9 |
| A | JP 2012-254400 A (KYOTO INSTITUTE OF TECHNOLOGY) 27 December 2012 (2012-12-27)<br>    entire text | 1-9 |
| A | JP 2008-308416 A (REAL PLASTIC KK) 25 December 2008 (2008-12-25)<br>    entire text | 1-9 |
| A | JP 2003-064387 A (KOMATSU SEIREN CO., LTD.) 05 March 2003 (2003-03-05)<br>    entire text | 1-9 |

☑ Further documents are listed in the continuation of Box C.     ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **22 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/026272** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2003-164827 A (ISHIKAWAJIMA HARIMA HEAVY IND. CO., LTD.) 10 June 2003 (2003-06-10)<br>entire text | 1-9 |
| A | US 5565158 A (BASF CORPORATION) 15 October 1996 (1996-10-15)<br>entire text | 1-9 |

Form PCT/ISA/210 (second sheet) (January 2015)

## INTERNATIONAL SEARCH REPORT

International application No.

**PCT/JP2023/026272**

| Box No. III | Observations where unity of invention is lacking (Continuation of item 3 of first sheet) |
|---|---|

This International Searching Authority found multiple inventions in this international application, as follows:

The claims are classified into the following two inventions.
(Invention 1) Claims 1-9
Document 1 discloses a method for monomerizing biodegradable polyester (polylactic acid). It is indicated that biodegradable polyester, another general-purpose plastic (exhibiting a higher melting point than polylactic acid), and water in a liquid state are mixed and subjected to a pressure greater than 1 megapascal, thereby melting the polylactic acid and separating the polylactic acid from the other general-purpose plastic, which can effectively advance the recycling process of the polylactic acid. Therefore, claims 1-2 lack novelty in the light of document 1 and thus do not have special technical features. However, claim 3 depending from claim 1 has the special technical feature of "the polyester is polyester fiber, the polymeric material is at least one polymer fiber selected from synthetic fiber, recycle fiber, semi-synthetic fiber, inorganic fiber, and natural fiber, and the solid mixture is a fiber product made of polyester fiber and polymer fiber". Claims 4-7 depending therefrom also have the same special technical feature as claim 3. Furthermore, claims 8-9 depend from claim 1.
Therefore, claims 1-9 are classified as invention 1.
(Invention 2) Claim 10
Claim 10 cannot be said to share the same or corresponding special technical feature with claim 3 classified as invention 1. Furthermore, claim 10 does not depend from claim 1. Additionally, claim 10 is not substantially identical to or similarly closely related to any of the claims classified as invention 1.
Therefore, claim 10 cannot be classified as invention 1.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-9**

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2023/026272**

| Patent document cited in search report | | | Publication date (day/month/year) | Patent family member(s) | | | Publication date (day/month/year) |
|---|---|---|---|---|---|---|---|
| JP | 2005-330211 | A | 02 December 2005 | (Family: none) | | | |
| WO | 2015/137365 | A1 | 17 September 2015 | JP | 2015-172113 | A | |
| | | | | TW | 201542629 | A | |
| JP | 2012-254400 | A | 27 December 2012 | (Family: none) | | | |
| JP | 2008-308416 | A | 25 December 2008 | WO | 2008/153093 | A1 | |
| JP | 2003-064387 | A | 05 March 2003 | (Family: none) | | | |
| JP | 2003-164827 | A | 10 June 2003 | (Family: none) | | | |
| US | 5565158 | A | 15 October 1996 | DE | 19542666 | A | |
| | | | | CA | 2154434 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019035022 A
- JP 2021510754 A
- JP 2022121193 A